# EUROPEAN PATENT SPECIFICATION

(11) **EP 3 159 768 B1**
(45) Date of publication and mention of the grant of the patent: **19.02.2020**
(21) Application number: 16250018.5
(22) Date of filing: 17.10.2016
(51) Int. Cl.: F24D 19/10, G05D 23/02

(54) **THERMOSTATIC VALVE**
THERMOSTATVENTIL
VANNE THERMOSTATIQUE

(30) Priority: 22.10.2015 GB 201518736
(43) Date of publication of application: 26.04.2017
(73) Proprietor: Schneider Electric Controls UK Limited, Telford TF3 3BL, Shropshire (GB)
(72) Inventor: KENT, John, Lostwithiel Cornwall PL22 0AX (GB)
(74) Representative: Badger, John Raymond

(56) References cited:
- EP-A1- 0 002 934
- DE-A1- 4 122 256
- GB-A- 2 276 941
- GB-A- 2 462 537

## Description

### Field of the Invention

The present invention is directed to a thermostatic valve or radiator valve for regulating the flow of heated fluid in a pipe. Heated fluid is distributed via the pipe within an interior living or working space for maintaining a suitable ambient temperature.

### Background of the Invention

Commercial premises, homes, offices, hotels and other locations have piped hot water systems wherein a boiler supplies hot water feeding a number of radiators in different locations, for example, rooms or individual offices or working spaces. It is desirable to maintain different spaces at different temperatures, depending upon factors such as whether a space is occupied or contains heat-sensitive items. A boiler or another suitable heat source provides hot fluid to one or more pipes which feeds the inlet sides of a number of radiators located in suitable locations within the premises. One or more return pipes connected to the outlet sides of the radiators return the fluid to the heat source for reheating.

A known method of providing local control of ambient temperature in individual rooms is to provide each radiator with an individual thermostatically controlled radiator valve. This device is fitted to the radiator inlet or outlet and includes a valve that opens or closes to control the hot water flow, and an actuator that opens and closes, respectively, the valve in response to a sensed cold or hot condition within the room. Particularly, when a desired room temperature or analog setting has been attained, the actuator actuates to temporarily reduce flow to the valve. Conversely, when the sensed room temperature falls below the desired temperature or analog setting, the actuator actuates to temporarily increase flow to the valve and allow hot water to flow into the radiator.

A temperature sensor is located within the valve housing which reacts to sensed external temperature. The valve housing is designed such that ambient room air is vented past the temperature sensor and operates the actuator. A known problem with existing thermostatic radiator valves is that the temperature sensor is in very close proximity to the radiator and/or the pipe carrying hot fluid. The temperature sensor, accordingly, gives a reading of the temperature near the radiator, rather than an accurate reading of the ambient temperature of the room. When the radiator valve is open and heated fluid flows nearby and through the valve, the temperature sensor will sense a higher temperature than the ambient room temperature. As a result, the thermostatic valve may overreact causing unwanted large temperature swings or cycle the valve on and off excessively. Either of these conditions may result in user dissatisfaction, either with room temperature or frequent resetting of the temperature.

Various solutions have been attempted, at least one using multiple temperature sensors, as disclosed in GB0716275, entitled "Thermostatic Control Device". A first temperature sensor senses the ambient temperature in the vicinity of the device and a second temperature sensor senses the temperature of the conduit. A processor receives temperature inputs from the first and second temperature sensors and produces an output based upon the temperature inputs for controlling actuation means. A disadvantage of this proposed solution is the additional expense and complexity of two temperature sensors. Moreover, potential error may be introduced should the second temperature incorrectly sense the temperature of the conduit.

Another solution which has been attempted is disclosed in DE4133942 A1, entitled "Heating System Thermostat Valve". This involves a pair of bimetallic discs to compensate for the effect of heat transfer from the valve to the sensing element. The bimetallic discs are an added complexity and expense which rather than solving the problem of error, may introduce further error into the thermostat, inasmuch as the bimetallic discs will constantly react to the change in the fluid conduit temperature. This will necessarily result in a "hunting" effect wherein the thermostat operates the valve to achieve both over and under the desired temperature, as the reaction to the change in the conduit temperature causes the bimetal to move in the opposite temperature direction, in an endless cycle.

A further attempted solution is disclosed in DE202013101040. As disclosed therein, a thermostatic valve uses an addition element enlarging the thermally effective surface to bring heat from the desired sensing zone into contact with the temperature sensing element. This solution does not incorporate a heat shield to prevent introduction of error due to the thermal influence of the fluid conduit.

Other proposals for thermostatic valves are described in GB 2462537A, EP 0002934A1 and DE 4122256A1.

It is a specific objective of the present invention to provide improved temperature control in a thermostatic radiator valve mounted on a fluid conduit.

### Summary of the Invention

As energy usage, and more specifically reduction of usage becomes more important from the standpoints of economic efficiency and environmental sensitivity, new efforts are being made to ensure that thermostatic devices reduce energy usage while at the same time, maintaining and even increasing sensed comfort. In the case of thermostatic radiator valves, ideally the only sensed temperature would be the ambient air temperature.

The present invention provides a thermostatic valve as defined in claim 1.

The thermostatic valve may be internally compartmentalized, dividing the interior space into one area comprising the space in which the temperature sensor is located, and at least one other space in which the remaining components are located.

The thermostatic valve is provided with a heat shield for shielding the temperature sensor from the heating effect of a fluid conduit.

There may be provided an adhesive foam disc in a thermostatic valve, the adhesive side of which is bonded to the temperature sensing element and having an integral aluminum reflective foil located on the non-adhesive side.

It is a purpose of this invention to thermally isolate the fluid conduit from the sensor. In this regard, the areas of the thermostatic valve assembly are divided into zones by the heat shield which is resistant to radiant and convection heat transfer. The upper zone containing the temperature sensor is separately ventilated from the lower zone, the latter being exposed to radiant and convection heat emitted by the fluid conduit.

### Brief Description of the Drawings

An embodiment of the present invention will now be more particularly described, by way of example, with reference to the accompanying drawings, wherein:
Figure 1 shows a sectional view of a thermostatic valve assembly;
Figure 2 shows an elevated view of a thermostatic valve assembly;
Figure 3 shows a perspective view of a heat shield of the present invention, and
Figure 4 shows a plan view of the heat shield of the present invention, as viewed from the perspective of the arrow numbered "4" in Figure 3.

### Description of the Preferred Embodiments

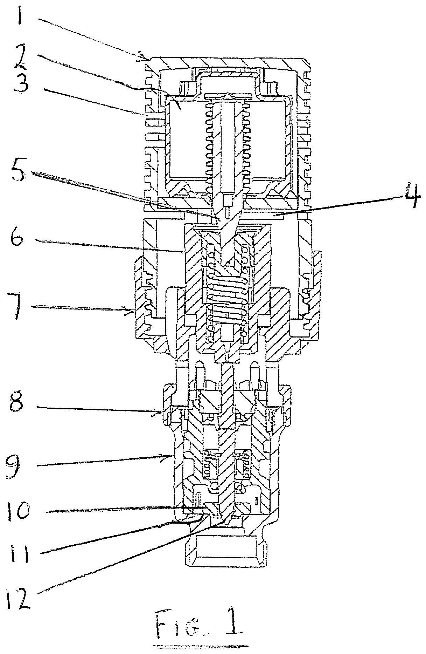

Referring to Fig. 1, a thermostatic valve for a radiator includes an adjustment cap 1, rotatable to provide a preselected level of heat via a valve controlling fluid in a conduit. Located within adjustment cap 1 and below its top surface lies temperature sensor 2 which is exposed to ambient, or room air via gap or gaps 3 located in the periphery of adjustment cap 1.

Temperature sensor 2 internally contains a medium which, when experiencing changing sensed temperature conditions, either cooling or warming, contracts or expands, respectively, thereby moving push rod 5 axially either in the direction of a fluid valve or retracting from the valve, respectively. Push rod 5 engages over-run assembly 6, the latter being contained in enclosure 7.

A valve body 9 is removably connected to enclosure 7 by threaded collar 8. A valve member 12 centrally contained within valve body 9 is engaged at its upper end as represented in Fig. 1 by over-run assembly 6 and is axially moveable thereby. Valve member 12 engages seat 11 at its lower end. Water flow through valve body 9 is modulated by disc 10, the latter being movable in relation to valve seat 11. Accordingly, valve member 12 transmits motion of the push rod 5 to disc 10.

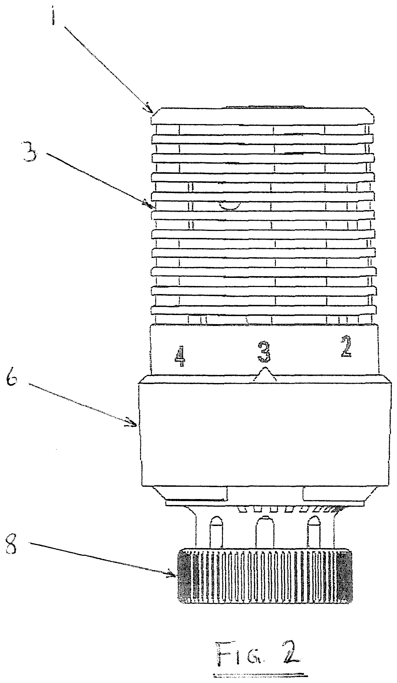

In use, a user will select a typical setting depending on the desired level of comfort, for example a setting of "3" as depicted in Fig. 2. Should the ambient temperature be such as to require additional heating than is provided by the setting of "3", the user moves the adjustment cap 1 to a number with a higher value than the "3" setting.

Referring again to Fig. 1, the push rod 5 will retract, thereby retracting the over-run assembly 6 and accordingly retracting the valve member 12. Upon retraction of the valve member 12, a greater quantity of heated fluid is allowed to flow through the valve body. The valves body may be orientated to allow flow to enter or exit at either one of two ports (not shown). Whatever port is selected as inlet, the flow will exit from the other port, and thereby through a conduit for heating the room air.

When the ambient air temperature approaches the user selected setting, the temperature sensor 2 medium begins to expand, thereby causing valve member 12 to extend into the seat 11. When the ambient air temperature reaches the user selected setting, the valve member 12 will have extended into the seat 11 to a position which provides a water flow sufficient to maintain the room temperature at the desired setting.

If the level of heat loss from the room to the outside environment increases, cool air flows over and into the adjustment cap. As cool air reaches the temperature sensor 2, the sensor medium contained therein begins to contract, thereby causing valve member 12 to retract from seat 11. Once the valve member 12 retracts sufficiently from seat 11, heated fluid flow increases, until the ambient room temperature sufficiently rises and fluid flow once again matches that required to provide for heat loss to the outside environment. The sensing and flow modulating process continues indefinitely until terminated by the user, generally by manually selecting the "Off' position on the adjustment cap 1.

As depicted in Fig. 1, a heat shield 4 divides the thermostatic valve into two zones, a hot zone and a cold zone. The hot zone is below the heat shield 4, in the area of the over-run assembly 6 and therebelow. The hot zone may be, but is not necessarily vented to the ambient environment. The cold zone is located above the heat shield 4, in the area of the sensor 2. The terms "hot" and "cold" are used here in the relative sense, and are not to be limited to particular ranges of ambient temperatures. An important aspect is that the heat shield 4 provides a thermal barrier for preventing radiated and convected heat emitted by the fluid conduit from reaching the sensor 2, and thereby establishes the hot zone and the cold zone.

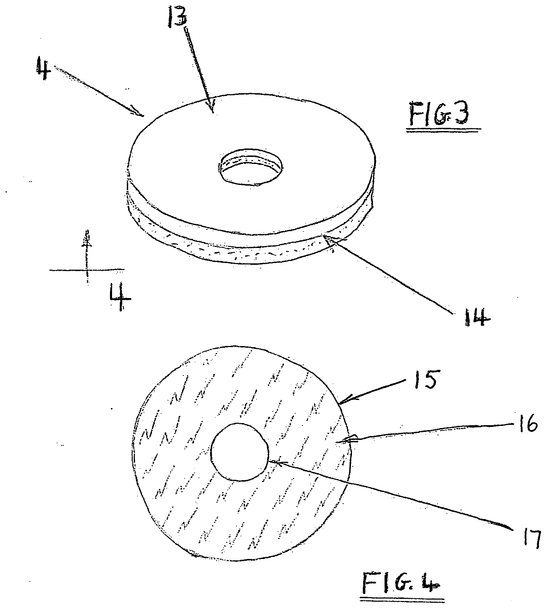

To further enhance the effectiveness of the heat shield, it may include layers, as shown in Fig. 3. The upper layer consists of a film of self- adhesive 13 for attachment to sensor 2. The middle layer consists of a foam disc 14. Foam disc 14 may be comprised of expanded polyethylene closed cell foam, preferably in the range of 2 to 6 mm in thickness. Bonded to the foam disc 14 is a lower layer comprising a disc 15 which may be comprised of aluminium foil in the range of 25 to 35 µm thickness. As shown in Fig. 4, disc 15 further is reflective of heat or optionally includes a reflective coating 16 on the exposed side.

The heat shield 4 is mountable within enclosure 7 and adjustment cap 1, being secured to the sensor 2 such that the reflective coating 16 faces the direction of the valve body 9. The heat shield 4 has a centrally located through-hole 17 through which push rod 5 extends, allowing a very thin film of air to surround the push rod. Advantageously, the heat shield 4 provides an effective barrier to prevent radiated heat and convected heated air on the hot side from entering the cold side and affecting the ambient room temperature detected by the sensor 2.

## Claims

1. A thermostatic valve for controlling heated fluid, said thermostatic valve comprising:
an adjustment cap (1) for adjusting the level of desired comfort, said adjustment cap being externally and internally exposable to ambient air,
a sensor body (2) disposed within said adjustment cap, said sensor body movably responsive to sensed ambient air,
a push rod (5) positioned adjacent said sensor body and movable in response to the movement of said sensor body,
a valve body (9), said valve body having disposed therein a movable valve member (12) for allowing and for restricting water flow within said valve, said movable valve member being responsive to movement of said push rod, and
a heat shield (14) disposed between said valve body and said sensor body,
**characterised in that** said heat shield (4) is provided with a heat reflective material (15) which is exposed to the valve body, said heat shield having a centrally located through hole (17) through which the push rod (5) extends.

2. The thermostatic valve according to claim 1 **characterised in that** said adjustment cap (1) and said sensor body (2) together define a cold zone, said valve body (9) interiorly defining a hot zone, and said heat shield (14) is disposed between said hot zone and said cold zone.

3. The thermostatic valve according to claim 1 or claim 2, **characterised in that** an over-run assembly (6) is disposed adjacent said push rod for transmitting motion from said push rod, and said movable valve member (12) is responsive to movement of said over-run assembly.

4. The thermostatic valve according to claim 3 **characterised in that** said heat shield (4) is provided between the sensor body (2) and the over-run assembly (6).

5. The thermostatic valve according to any one of the preceding claims, **characterised in that** said heat shield (4) is generally disc-shaped, having an upper layer (13) and a lower layer (15).

6. The thermostatic valve according to any one of the preceding claims, **characterised in that** said heat shield comprises an upper layer (13) which is an adhesive for adhering said heat shield to said sensor body.

7. The thermostatic valve according to any one of the preceding claims, **characterised in that** said heat shield comprises a lower layer (15) which is an aluminium foil disc.

8. The thermostatic valve according to any one of the preceding claims, **characterised in that** the heat shield (4) comprises an upper layer (13) and a lower layer (15) having disposed therebetween a layer (14) of foam.

9. The thermostatic valve according to claim 8, **characterised in that** the layer (14) of foam is a layer of expanded polyethylene closed cell foam.

10. The thermostatic valve according to any one of the preceding claims, **characterised in that** said heat shield (4) substantially prevents convected and radiated heat from a heated fluid pipe from entering the area of the sensing means, thereby allowing the sensing means to react to the sensed ambient air temperature.

11. The thermostatic valve according to any one of the preceding claims **characterised in that** the valve comprises an upper zone containing the sensor body (2) and wherein said upper zone is separately ventilated from a lower zone which, in use, is exposed to radiant and convection heat emitted by the valve body (9).

## Patentansprüche

1. Thermostatventil zum Steuern von erwärmtem Fluid, wobei das Thermostatventil umfasst:
eine Einstellkappe (1) zum Einstellen des Niveaus des gewünschten Komforts, wobei die Einstellkappe außen und innen der Umgebungsluft ausgesetzt werden kann,
einen Sensorkörper (2), der innerhalb der Einstellkappe angeordnet wird, wobei der Sensorkörper beweglich auf erfasste Umgebungsluft reagiert,
eine Schubstange (5), die angrenzend an den Sensorkörper angeordnet und als Reaktion auf die Bewegung des Sensorkörpers beweglich ist,
einen Ventilkörper (9), wobei der Ventilkörper ein bewegliches Ventilelement (12) zum Ermöglichen und Begrenzen des Wasserflusses innerhalb des Ventils aufweist, wobei das bewegliche Ventilelement auf die Bewegung der Schubstange anspricht, und
einen Hitzeschild (14), der zwischen dem Ventilkörper und dem Sensorkörper angeordnet ist,
**dadurch gekennzeichnet, dass** der Hitzeschild (4) mit einem wärmereflektierenden Material (15) versehen wird, das dem Ventilkörper ausgesetzt wird, wobei der Hitzeschild eine zentral angeordnete Durchgangsbohrung (17) aufweist, durch die sich die Schubstange (5) erstreckt.

2. Thermostatventil nach Anspruch 1, **dadurch gekennzeichnet, dass** die Einstellkappe (1) und der Sensorkörper (2) zusammen eine Kaltzone definieren, wobei der Ventilkörper (9) innerlich eine Heißzone definiert und der Hitzeschild (14) zwischen der Heißzone und der Kaltzone angeordnet wird.

3. Thermostatventil nach Anspruch 1 oder Anspruch 2, **dadurch gekennzeichnet, dass** eine Nachlaufanordnung (6) angrenzend an die Schubstange angeordnet wird, um eine Bewegung von der Schubstange zu übertragen, und das bewegliche Ventilelement (12) auf die Bewegung der Nachlaufanordnung reagiert.

4. Thermostatventil nach Anspruch 3, **dadurch gekennzeichnet, dass** der Hitzeschild (4) zwischen dem Sensorkörper (2) und der Nachlaufanordnung (6) bereitgestellt wird.

5. Thermostatventil nach einem der vorhergehenden Ansprüche, **dadurch gekennzeichnet, dass** der Hitzeschild (4) im Allgemeinen scheibenförmig ist und eine obere Schicht (13) und eine untere Schicht (15) aufweist.

6. Thermostatventil nach einem der vorhergehenden Ansprüche, **dadurch gekennzeichnet, dass** der Hitzeschild eine obere Schicht (13) umfasst, die ein Klebstoff zum Verkleben des Hitzeschildes mit dem Sensorkörper ist.

7. Thermostatventil nach einem der vorhergehenden Ansprüche, **dadurch gekennzeichnet, dass** der Hitzeschild eine untere Schicht (15) umfasst, die eine Aluminiumfölienscheibe ist.

8. Thermostatventil nach einem der vorhergehenden Ansprüche, **dadurch gekennzeichnet, dass** der Hitzeschild (4) eine obere Schicht (13) und eine untere Schicht (15) mit einer dazwischen angeordneten Schaumschicht (14) umfasst.

9. Thermostatventil nach Anspruch 8, **dadurch gekennzeichnet, dass** die Schaumschicht (14) eine Schicht aus expandiertem Polyethylen-Schaum mit geschlossenen Zellen ist.

10. Thermostatventil nach einem der vorhergehenden Ansprüche, **dadurch gekennzeichnet, dass** der Hitzeschild (4) im Wesentlichen verhindert, dass konvektierte und abgestrahlte Wärme aus einem erwärmten Fluidrohr in den Bereich des Erfassungsmittels gelangt, wodurch das Erfassungsmittel auf die erfasste Umgebungslufttemperatur reagieren kann.

11. Thermostatventil nach einem der vorhergehenden Ansprüche, **dadurch gekennzeichnet, dass** das Ventil eine obere Zone umfasst, die den Sensorkörper (2) enthält, und wobei die obere Zone getrennt von einer unteren Zone belüftet wird, die im Einsatz Strahlungs- und Konvektionswärme ausgesetzt wird, die vom Ventilkörper (9) abgegeben wird.

## Revendications

1. Vanne thermostatique pour la régulation d'un fluide chauffé, ladite vanne thermostatique comprenant :
un bouchon de réglage (1) pour ajuster le niveau de confort désiré, ledit bouchon de réglage pouvant être exposé extérieurement et intérieurement à l'air ambiant, un corps de détecteur (2) disposé au sein dudit bouchon de réglage, ledit corps de détecteur répondant de façon mobile à la détection d'air ambiant, une tige poussoir (5) placée dans une position adjacente audit corps de détecteur et pouvant être déplacée en réponse au mouvement dudit corps de détecteur, un corps de vanne (9), au sein dudit corps de vanne étant disposé un élément mobile de vanne (12) pour permettre et restreindre l'écoulement d'eau au sein de ladite vanne, ledit élément mobile de vanne étant sensible au mouvement de ladite tige poussoir, et un bouclier thermique (14) étant disposé entre ledit corps de vanne et ledit corps de détecteur,
**caractérisée en ce que** ledit bouclier thermique (4) est doté d'un matériau réfléchissant la chaleur (15), qui est exposé au corps de vanne, ledit bouclier thermique étant doté d'un trou traversant (17) positionné centralement, à travers lequel est déployée la tige poussoir (5).

2. Vanne thermostatique selon la revendication 1, **caractérisée en ce que** ledit bouchon de réglage (1) et ledit corps de détecteur (2) définissent ensemble une zone froide, ledit corps de vanne (9) définissant intérieurement une zone chaude, et ledit bouclier thermique (14) étant disposé entre ladite zone chaude et ladite zone froide.

3. Vanne thermostatique selon la revendication 1 ou la revendication 2, **caractérisée en ce qu'**un ensemble de dépassement (6) est disposé dans une position adjacente à ladite tige poussoir pour la transmission de mouvement depuis ladite tige poussoir, et ledit élément mobile de vanne (12) étant sensible au mouvement dudit ensemble de dépassement.

4. Vanne thermostatique selon la revendication 3, **caractérisée en ce que** ledit bouclier thermique (4) est placé entre le corps de détecteur (2) et l'ensemble de dépassement (6).

5. Vanne thermostatique selon une quelconque des revendications précédentes, **caractérisée en ce que** ledit bouclier thermique (4) a globalement la forme d'un disque, avec une couche supérieure (13) et une couche inférieure (15).

6. Vanne thermostatique selon une quelconque des revendications précédentes, **caractérisée en ce que** ledit bouclier thermique comprend une couche supérieure (13), qui est adhésive pour assurer l'adhérence dudit bouclier thermique audit corps de détecteur.

7. Vanne thermostatique selon une quelconque des revendications précédentes, **caractérisée en ce que** ledit bouclier thermique comprend une couche inférieure (15) qui est un disque en film d'aluminium.

8. Vanne thermostatique selon une quelconque des revendications précédentes, **caractérisée en ce que** le bouclier thermique (4) comprend une couche supérieure (13) et une couche inférieure (15), une couche (14) de mousse étant intercalée entre les deux.

9. Vanne thermostatique selon la revendication 8, **caractérisée en ce que** la couche (14) de mousse est une couche de mousse à alvéoles fermées en polyéthylène expansé.

10. Vanne thermostatique selon une quelconque des revendications précédentes, **caractérisée en ce que** ledit bouclier thermique (4) empêche globalement l'introduction, dans la zone du dispositif de détection, de toute chaleur de convection et rayonnée provenant d'un tuyau de fluide chauffé, afin de permettre au dispositif de détection de réagir à la température d'air ambiant détectée.

11. Vanne thermostatique selon une quelconque des revendications précédentes, **caractérisée en ce que** la vanne comprend une zone supérieure contenant le corps de détecteur (2), et ladite zone supérieure étant ventilée séparément d'une zone inférieure, qui est exposée, en cours d'usage, à la chaleur de rayonnement et de convection émise par le corps de vanne (9).
